Europäisches Patentamt

European Patent Office

Office européen des brevets

(19)

(11) Numéro de publication: **0 112 253**
**A1**

(12)

# DEMANDE DE BREVET EUROPEEN

(21) Numéro de dépôt: 83402425.9

(22) Date de dépôt: 14.12.83

(51) Int. Cl.³: **G 06 F 3/033**
G 06 K 11/06

(30) Priorité: 14.12.82 FR 8220944

(43) Date de publication de la demande:
27.06.84 Bulletin 84/26

(84) Etats contractants désignés:
AT BE CH DE FR GB IT LI LU NL SE

(71) Demandeur: VIDEO PRESTATIONS S.A.
16 Rue de la Fraternité
F-94500 Champigny sur Marne(FR)

(72) Inventeur: Taieb, José
22 rue Chanzy
F-94500 Champigny sur Marne(FR)

(74) Mandataire: Bressand, Georges et al,
c/o CABINET LAVOIX 2 Place d'Estienne d'Orves
F-75441 Paris Cedex 09(FR)

(54) Générateurs d'ordres électriques par interruption manuelle d'un rayonnement lumineux.

(57) Générateur d'ordres électriques par interruption manuelle d'un rayonnement lumineux du type comprenant une série de sources de rayonnement, une série de détecteur de ce même rayonnement, ainsi qu'un circuit d'alimentation et d'exploitation (3) raccordé aux sources et aux détecteurs, caractérisé en ce que les sources et les détecteurs sont disposés respectivement selon des rangées parallèles en se faisant face et en formant une série de couples source-détecteur destinés à être associés respectivement à des indications visuelles (H,B,D,G,Z,N) pour matérialiser un ordre à donner et en ce qu'il est prévu en outre dans le circuit d'alimentation et de commande (3) des moyens qui, lorsqu'un faisceau de rayonnement d'un couple source-détecteur est interrompu, engendrent un signal électrique capable de déclencher l'ordre correspondant à ce faisceau.

FIG.1

EP 0 112 253 A1

Croydon Printing Company Ltd.

## Générateur d'ordres électriques par interruption manuelle d'un rayonnement lumineux.-

La présente invention est relative à un générateur d'ordres électriques à interruption de faisceaux lumineux.

On connait depuis longtemps les dispositifs de commande fonctionnnant par interruption d'un faisceau lumineux dans lesquels par exemple, une cellule photo-électrique coopère avec une source lumineuse, une commande étant déclenchée lorsque le faisceau ainsi engendré est interrompu.

Dans le domaine vidéo, il est par ailleurs connu d'utiliser des générateurs d'ordres électriques qui sont, le plus souvent, associés à l'écran d'un tube à rayons cathodiques et qui permettent en fonction de l'image affichée de déclencher un ordre donrée.

Par exemple, certains de ces dispositifs fonctionnnent avec un style muni d'un photo-détecteur capable de capter la lumière produite par l'écran, un circuit d'analyse étant associé à ce style pour établir les coordonnées en X et en Y du point visé par l utilisateur lorsqu'il indique le point considéré par le style. Ce dispositif est indissociablement lié à un écran de télévision et son usage est donc strictement limité à l'application du domaine vidéo. Par ailleurs, le circuit d'analyse est complexe et d'un coût élevé.

Il existe également des matrices destinées à être associées à des écrans de télévision et comprenant un grillage placé devant cet écran, l'utilisateur pouvant provoquer, de façon tactile, un signal électrique dans le grillage qui est ensuite analysé en coordonnées X,Y par un ordinateur. Ce dispositif est également coûteux et nécessite l'analyse par ordinateur.

On connait également certains autres disp- sitifs générateurs d'ordres électriques fonctionnant par ultra- ou infra-sons ou par effet électrostatique, mais tous ces dispositifs ont les mêmes inconvénients que ceux précédemment mentionnés, à savoir sont d'un coût élevé et ont une fliabilité qui laisse à désirer.

Enfin, dans la revue "Automatisme", vol.22, n° 12, Décembre 1977, Paris, on décrit un système de repérage par interruption manuelle de rayons lumineux, comprenant un cadre dans lequel sont disposés des photodiodes et des photodétecteurs dans des positions mutuellement opposées. L'interruption de rayons lumineux dans les directions X-Y est détectée et exploitée pour déterminer les coordonnées du point où on a interrompu les faisceaux lumineux. Dans ce cas, on utilise des diodes électroluminescentes associées à un circuit d'alimentation impulsionnelle, tandis qu'il est prévu un système de détection séquentielle à matrice X-Y pour relever lesdites coordonnées. Ce système nécessite des circuits de "balayage", des compteurs des mémoires tampons, etc.. c'est à dire un circuit complexe d'exploitation qui en rend la réalisation coûteuse. De plus, la dispersion des faisceaux lumineux des diodes peut conduire à des interprétations erronées, car leurs faisceaux peuvent frapper plusieurs photo-récepteurs à la fois, ce phénomène nécessitant alors une optique de concentration devant chaque émetteur.

L'invention a donc pour but de fournir un générateur d'ordres électriques par interruption manuelle de faisceaux lumineux de ce type qui soit plus simple, dont la réalisation est moins coûteuse, qui soit adaptable à une grande variété d'applications parmi lesquelles le domaine vidéo et dans lequel l'interprétation des signaux fournis par les photodéte- teurs ne conduit pas à des ordres érronés.

L'invention a donc pour objet un tel générateur d'ordres électriques par interruption manuelle
d'un rayonnement lumineux du type comprenant une série
de sources de rayonnement,une série de détecteur de ce
même rayonnement, ainsi qu'un circuit d'alimentation
et d'exploitation raccordé aux sources et aux détecteurs, qui sont disposés respectivement selon des rangées parallèles en se faisant face le long des bords
du champ d'une image affichée et en formant une série
de couples source-détecteur destinés à être associés
respectivement à des indications visuelles pour
matérialiser un ordre à donner, ledit circuit d'alimentation et de commande comportant des moyens qui,
lorsqu'un faisceau de rayonnement d'un couple source-
détecteur est interrompu, engendrent un signal électrique capable de déclencher l'ordre correspondant à
ce faisceau, caractérisé en ce que ledit circuit
d'alimentation et d'exploitation comporte des moyens
pour assurer une alimentation séquentielle desdites
sources lumineuses avec un courant de fonctionnement
impulsionnel.

Grâce à ces caractéristiques, l'analyse des
signaux fournis par les photodétecteurs devient extrêmement simple puisqu'ils ne peuvent donner un signal
de sortie que lorsque leur diode associée est alimentée.

Le générateur suivant l'invention peut être
associé avantageusement à l'écran d'un tube à rayons
cathodiques dont l'image apparaît à travers ledit
support. Toutefois, d'autres applications de ce générateur peuvent être envisagées. Ainsi, il peut être
placé devant une carte géographique, un plan de métro,
un plan d'un bâtiment ou autre, de telle façon que le simple pointage par le doigt d'une zone donnée de la carte peut donner lieu à l'affichage sur un écran, sur la carte ou sur le plan d'itinéraire d'un itinéraire à suivre, d'informations sur la zone indiquée, etc.

D'autres caractéristiques et avantages de l'invention apparaîtront au cours de la description qui va suivre, donnée uniquement à titre d'exemple et faite en référence aux dessins annexés, sur lesquels :

- la Fig.1 est une vue en perspective d'un moniteur vidéo auquel est associé un générateur d'ordres électriques;

- la Fig.2 montre une vue en coupe latérale partielle, et à plus grande échelle, du moniteur représenté à la Fig.1, la vue montrant notamment la construction mécanique du support du générateur;

- la Fig.3 est un schéma de principe du circuit d'alimentation et d'exploitation du générateur pour autant qu'un seul couple-détecteur soit concerné;

- la Fig.4 est un diagramme des temps illustrant le fonctionnement du schéma représenté à la Fig.3;

- la Fig.5 est un diagramme des temps plus complet du fonctionnement du générateur suivant l'invention;

- la Fig.6 représente un schéma détaillé d'une partie du circuit d'alimentation et d'exploitation du générateur;

- la Fig.7 montre une autre partie du schéma de ce circuit;

- la Fig.8 représente schématiquement une application du générateur d'ordres électriques suivant l'invention, à la commande d'une installation vidéo en circuit fermé;

- la Fig.9 est un schéma illustrant comment sont commandés les moteurs d'entraînement assurant les diverses fonctions de la caméra de télévision représentée à la Fig.8.

- les Fig.10 et 11 montrent deux autres applications du dispositif suivant l'invention.

L'invention sera décrite ci-après à l'aide d'un exemple de réalisation précis qui n'en est qu'une application parmi d'autres.

Il s'agit ici de la commande d'un circuit fermé de télévision. Cependant, l'invention peut être utilisée d'une façon générale dans tous les cas où il s'agit d'engendrer des ordres électriques en fonction d'indications visuelles symbolisant ou décrivant les ordres à exécuter. Dans une telle application plus générale, le générateur suivant l'invention peut être assimilée à un clavier dans lequel les fonctions des touches seraient remplacées par l'interruption d'un rayon lumineux.

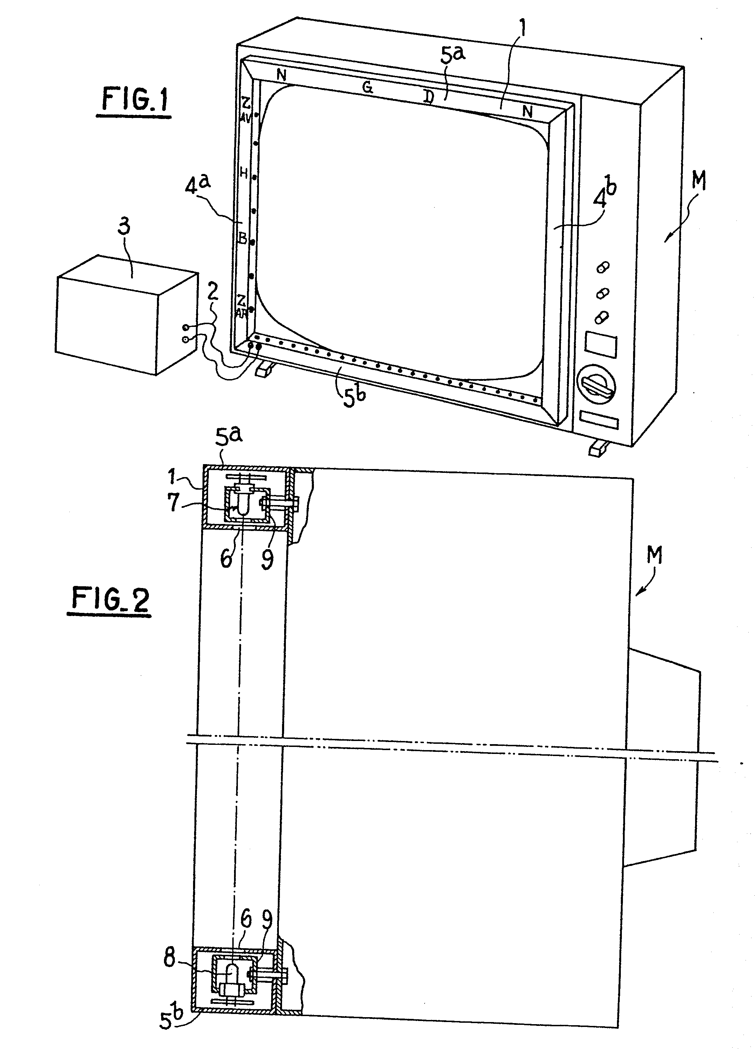

Ceci étant précisé, la Fig.1 représente un moniteur de télévision M devant lequel est montée la partie mécanique du générateur d'ordres électriques suivant l'invention. Cette partie mécanique comporte un cadre 1 qui, présente la dimension de l'écran du moniteur M. Ce cadre est relié par un câble 2 à un circuit d'alimentation et d'exploitation 3.

Comme on peut le voir sur la Fig.2, le cadre 1 que l'on peut appeler " cadre tactile " comporte des côtés 4a, 4b et 5a,5b opposés dont les faces intérieures présentent une rangée d'ouvertures 6. Ces ouvertures correspondantes des côtés opposés sont alignées les unes sur les autres, respectivement.

Dans le cas représenté, les côtés 4a et 5a reçoivent des sources lumineuses 7, tandis que les côtés 4b et 5b reçoivent autant de photo-détecteurs 8, les sources et les détecteurs étant fixés sur des montures 9 leur permettant d'être fixés rigidement au cadre 1.

On notera que les sources et les photo-dé-tecteurs sont au nombre de 40, mais ce nombre est donné à titre d'exemple, bien entendu.

Dans le mode de réalisation préféré du générateur suivant l'invention, les sources 7 sont constituées par des diodes électroluminescentes émettant dans la bande des infrarouges, la longueur d'onde étant située aux environs de 900 nm, par exemple.

On sait que de telles diodes ne peuvent normalement transmettre de la lumière que sur des distances relativement faibles, de l'ordre de 30 mm pour que le courant de fonctionnement de la diode reste dans une plage acceptable sur le plan de la dissipation thermique. Or, une telle distance est trop faible pour pouvoir être utilisée en pratique dans un générateur du type de l'invention. En effet, il est à noter que l'écran du moniteur M présente une diagonale de 36 cm, ce qui revient à une dimension de 29 cm du grand côté du rectangle formé par le cadre 1.

Suivant une caractéristique avantageuse de l'invention qui néanmoins permet d'utiliser des diodes électroluminescentes classiques du commerce, il est prévu des moyens pour n'alimenter ces diodes périodiquement que pendant une brève période de temps prédéterminée, toutes les sources lumineuses étant ainsi cycliquement alimentées avec une impulsion de courant dont l'amplitude peut être nettement plus élevée que si la diode était alimentée en permanence. De la sorte, la distance couverte par la lumière émanant de la diode peut être comparativement très grande et suffisante pour être utilisée devant un écran de télévision dont la diagonale est de 36 cm ou plus.

Plus précisément et pour fixer les idées, si on utilise une diode fabriquée par la Société Général Instrument (EUA) sous la référence 7124, le courant pulsé avec lequel les diodes sont alimentées peut avoir une amplitude de l'ordre de 300 mA, ce qui donne une puissance d'émission impulsionnelle de 3 Watts, le cycle total d'émission des 40 diodes étant de 200 ms, chaque diode étant alimentée pendant 2,5 ms par cycle total.

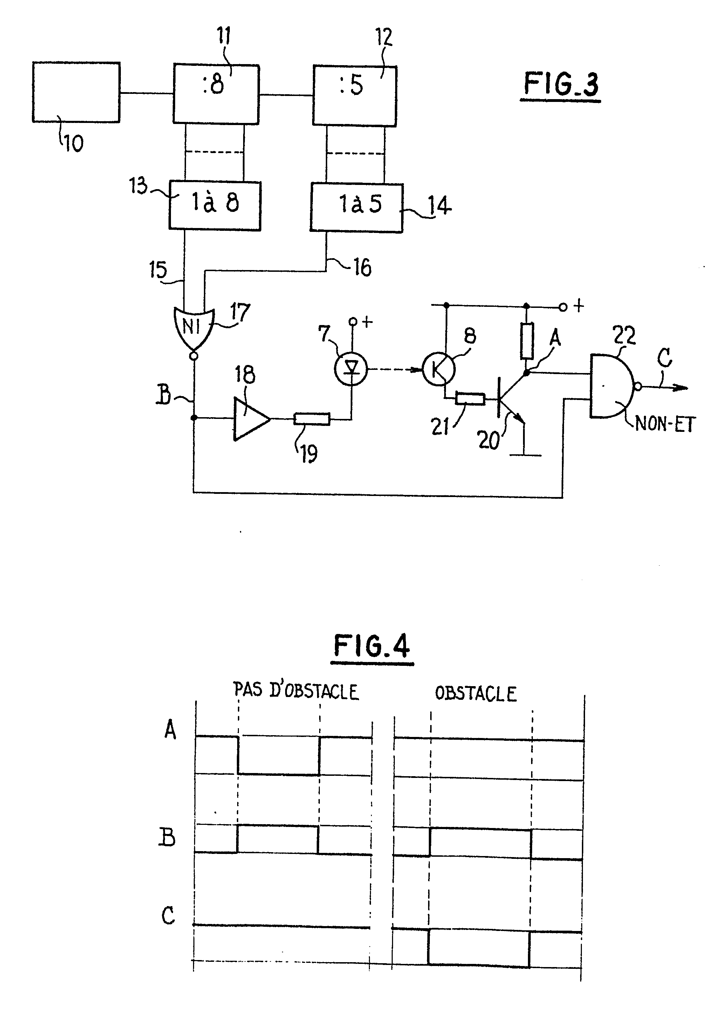

On a représenté sur la Fig.3 un exemple de réalisation d'un circuit permettant d'alimenter les diodes de la façon indiquée.

Un circuit à base de temps 10 est raccordé à un diviseur par huit 11 et à un diviseur par cinq 12, ces diviseurs étant respectivement connectés à un compteur par huit 13 et un compteur par cinq 14. En d'autres termes, les 40 diodes électroluminescentes sont réparties par groupe de huit qui sont adressées par le compteur 14, qui passe d'une unité à l'autre chaque fois que le compteur 13 a enregistré huit impulsions. Les sorties respectives 15 et 16 des compteurs 13 et 14 sont appliquées à une porte NI 17, à la sortie de laquelle est raccordé un amplificateur de puissance 18 alimentant à son tour une diode électroluminescente 7 à travers une résistance 19.

Comme déjà indiqué ci-dessus, chaque source 7 formée par une diode électroluminescente irradie un détecteur particulier qui se trouve en regard dans le côté opposé du cadre 1 (Fig.1). Ce photo-détecteur qui peut être constitué par celui fabriqué sous la référence MT 8020 par la société Général Instrument déjà mentionnée, commande un transistor 20 à travers une résistance 21, le collecteur de ce transistor étant raccordé à une porte NON-ET 22 dont l'autre entrée est reliée à la sortie de la porte NI 17. La porte NON-ET fournit à sa sortie un signal dont l'état haut ou bas correspond respectivement à l'absence ou à la présence d'un obstacle entre la source et le détecteur correspondants.

Ce fonctionnement est illustré sur le diagramme de la Fig.4 dont la partie de gauche représente le cas où il n'y a pas d'obstacle entre la source 7 et le récepteur 8, la partie de droite représentant le cas contraire. Les courbes A,B et C de la Fig.4 représentent les signaux apparaissant respectivement sur les points indiqués par les mêmes lettres sur la Fig.3. On voit que lorsqu'il n'y a pas d'obstacle entre la source et le récepteur, la sortie de la porte 22 reste au niveau haut, tandis que lorsqu'il y a un obstacle, cette sortie descend vers le niveau bas pendant une période de temps qui est prédéterminée et dont la durée est fixée d'une façon qui sera décrite ci-après.

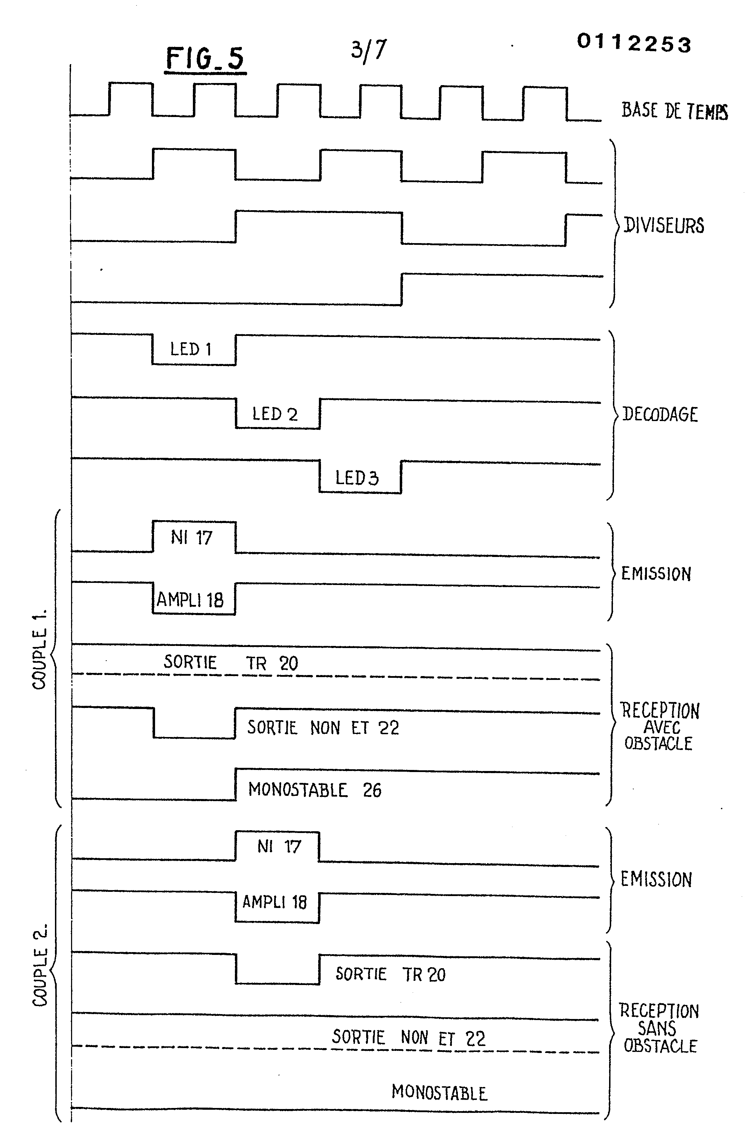

La Fig.5 représente un diagramme des temps plus complet montrant notamment la relation temporelle des divers signaux de deux sources lumineuses 7 (appelées LED 1 et LED 2 selon la dénomination anglaise), le faisceau de la source LED 1 étant interrompu par un obstacle et la source LED 2 ne l'étant pas.

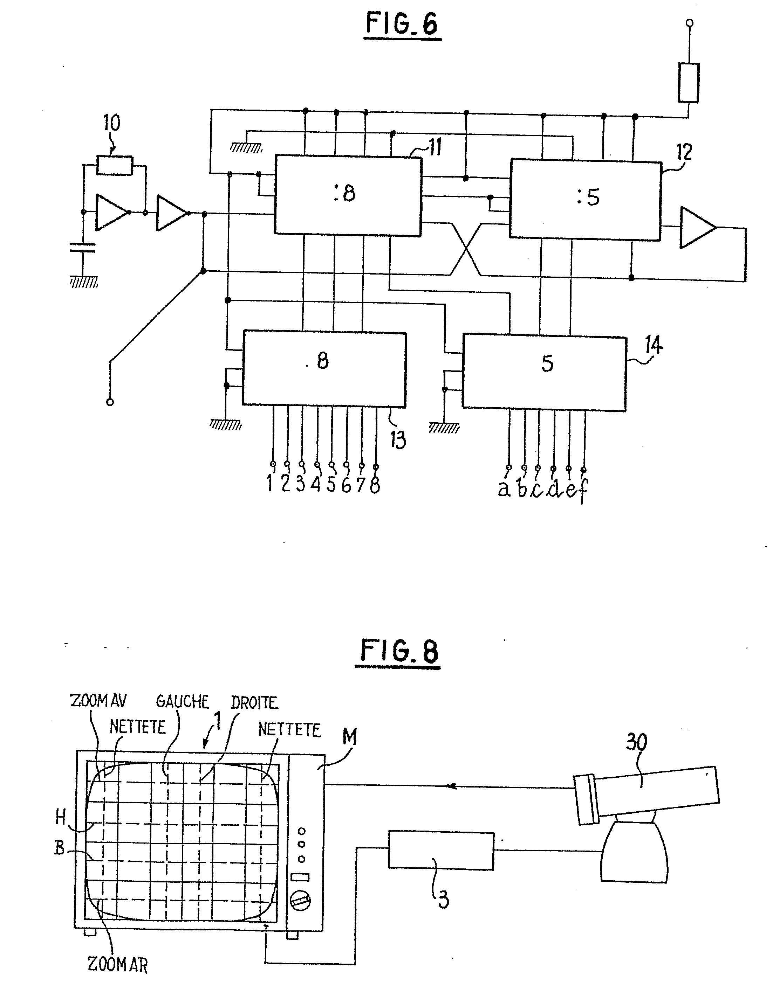

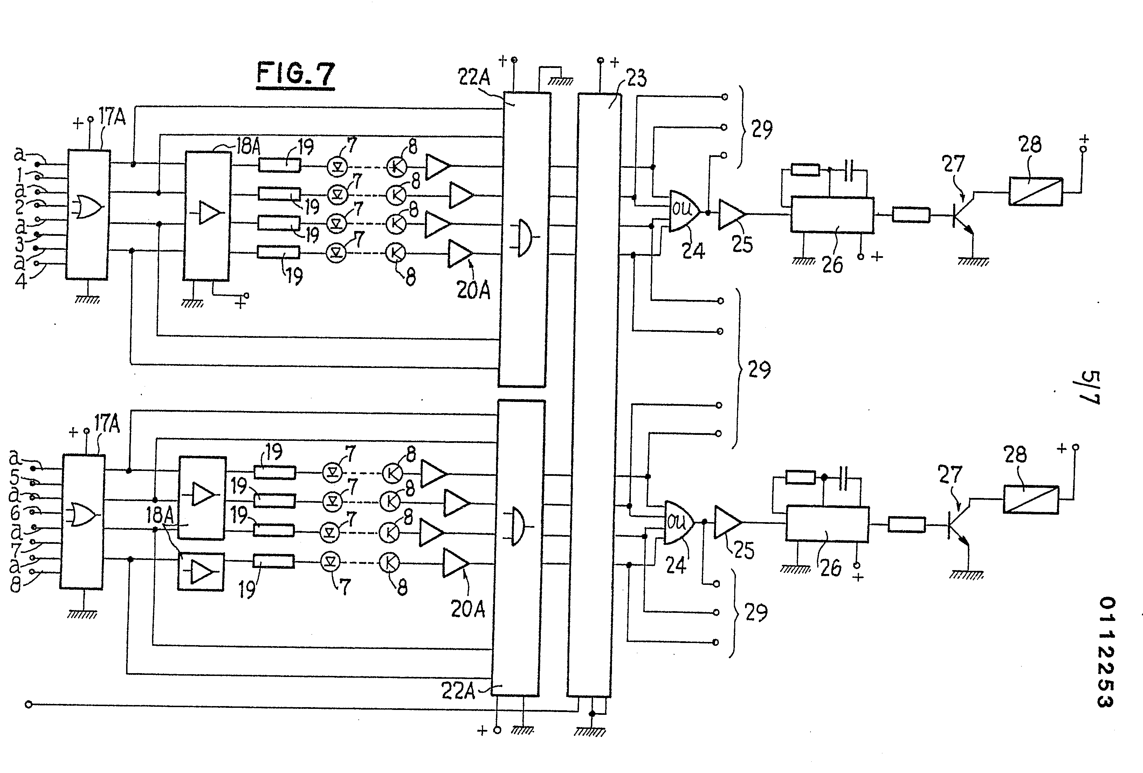

Pour comprendre la Fig.5, il convient de se reporter aux Fig.6 et 7 que l'on va maintenant décrire et qui représentent plus en détail le circuit d'alimentation et d'exploitation 3 représenté à la Fig.1.

Tout d'abord, sur la Fig.6, on voit qu'un oscillateur 10, est relié aux diviseurs 11 et 12 et aux compteurs 13 et 14 dont les sorties, au nombre de 8 et 5, respectivement sont destinés à adresser les 40 sources lumineuses 7 du cadre 1. Plus précisément, le compteur 13 effectue un cycle de comptage pendant que le compteur 14 effectue un simple pas de comptage.

En se reportant à la Fig.7, on voit représenté, la commande de huit sources lumineuses, et l'exploitation des signaux fournis par huit récepteurs associés, les autres couples source-détecteur étant commandés de la même façon.

Si on suppose que les sources représentées à la Fig.7 sont les huit premières sources de la série de 40 du générateur, on voit que les portes NI 17A associées à ces sources reçoivent respectivement le signal de la borne $a$ du compteur 14 et les signaux 1 à 8 du compteur 13, ces signaux étant soumis à l'opération logique NI comme cela était décrit en faisant référence à la Fig.3. Bien entendu, le second groupe de huit sources est adressé par la borne $b$ du compteur 14 et par l'une des bornes 1 à 8 du compteur 13, etc.

Les portes NI 17 sont de préférence regroupées dans des circuits désignés par les références 17A et les sorties des portes individuelles sont appliquées à des amplificateurs 18 qui sont regroupés dans trois circuits 18A.

Quant aux récepteurs 8, ils sont raccordés à leurs amplificateurs 20A suivis de deux circuits 22A dans lesquels sont respectivement incorporées quatre portes NON-ET 22 de la Fig.3.

Il est à noter que le nombre de couples source-détecteur utilisé dans le cadre 1 détermine la résolution avec laquelle le champ délimité par le cadre 1 peut être exploité. Dans le cas représenté, le cadre 1 forme une matrice de faisceaux croisés de 24 x 16 couples source-détecteur qui combinés suivant différentes façons permettent d'obtenir un certain nombre de commandes.

Dans le cas représenté, on a combiné chaque quatre couples pour activer une commande réalisée pour une fonction OU et ceci pour augmenter la dimension de la zone de commande intéressée par un groupe de quatre couples source-détecteur. Il en résulte que l'on peut activer une commande seule à laquelle est affecté un seul groupe, mais également deux commandes simultanées si on place un obstacle à l'intersection de faisceaux perpendiculaires émanant de deux groupes correspondants. Avec quarante couples dans le cadre, on a donc ici dix commandes (6+4) activées séparément ou simultanément.

Si on veut augmenter les possibilités de commande, on couple les faisceaux perpendiculaires en matrice X-Y par une fonction logique E par paires d'un faisceau horizontal et d'un faisceau vertical. Le nombre de possibilités par 24 + 16 couples sources-détecteur est de 24 x 16 = 384.

Par conséquent, dans le mode de réalisation représenté sur la Fig.7, les quatres signaux qui proviennent des portes NON-ET sont regroupés, après avoir été mis en forme dans un circuit conformateur 23 dans des portes OU 24 dont la sortie est reliée à un amplificateur 25 lui-même connecté à une multivibrateur monostable 26 dont la sortie est destinée, après amplification dans un amplificateur 27 à être appliqué directement à un relais de commande 28. Les sorties du circuit de mise en forme 23 peuvent être appliquées au besoin à d'autres dispositifs d'exploitation moyennant les sorties 29 qui peuvent être raccordées à un ordinateur par exemple.

On voit donc que si on veut augmenter les possibilités de commande du générateur, il suffit de raccorder à chaque sortie des circuits de mise en forme 23 ou éventuellement à la sortie de circuits à fonction logique ET (matrice), un relais de commande ou autre dispositif analogue tels qu'un semi-conducteur affecté à déclencher une opération particulière correspondant à l'ordre que le couple correspondant source-détecteur est destiné à déclencher, le cas échéant.

En se reportant de nouveau à la Fig.5, on voit que dans l'hypothèse ou un obstacle s'est interposé dans le faisceau allant de la première source au premier détecteur, la porte NON-ET 22 fournit un signal de sortie qui fait basculer le monostable 26 par l'intermédiaire des circuits 23,24 et 25, de sorte que son signal de sortie passe au niveau haut et que le relais 28 est excité. La sortie du monostable est maintenue à un niveau haut tant que l'obstacle n'a pas disparu et que son propre temps de basculement ne se soit pas écoulé après disparition de cet obstacle. Il est à noter que le temps de remise à zéro du monostable 26 est légèrement supérieur à l'intervalle de temps couvert par une période de recherche des 40 sources lumineuses (dans l'exemple, une période de 200 ms).

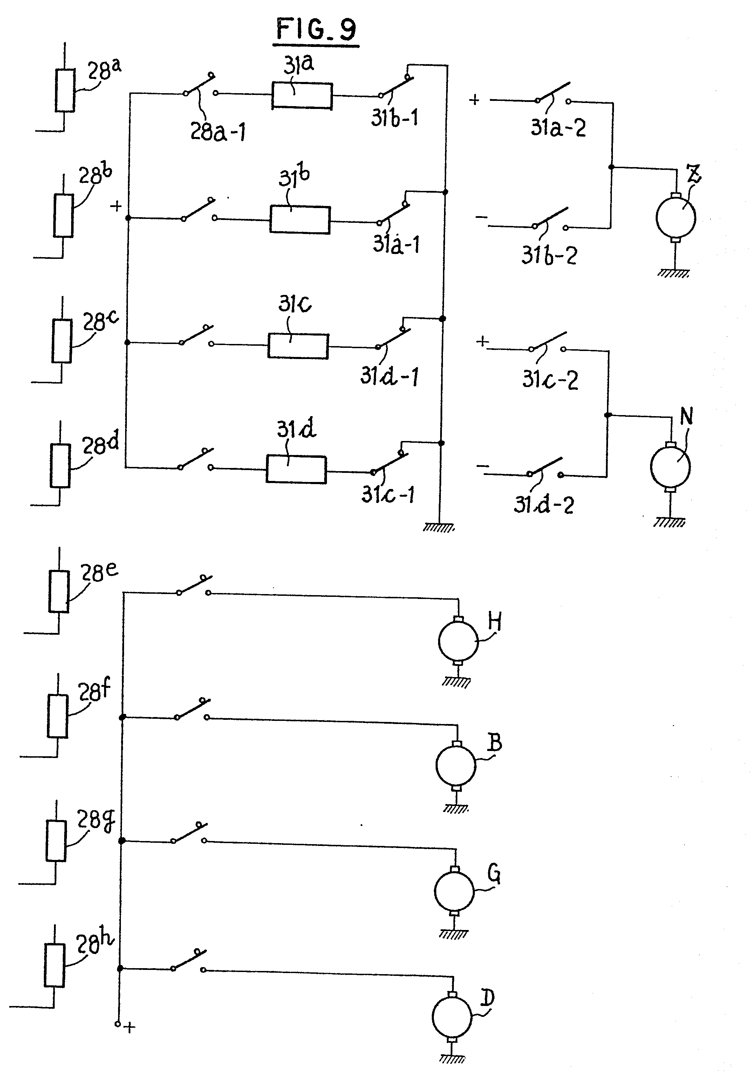

La Fig.8 représente une application particulière du générateur suivant l'invention. Il s'agit ici de la commande d'une caméra de télévision 30 dont l'image est affichée sur un moniteur M pourvu d'un cadre 1 et d'un circuit d'alimentation et d'exploitation 3 suivant l'invention. Comme cela est classique dans cette technique, la caméra 30 peut être montée sur une tourelle et commandée de façon à pouvoir se déplacer vers le haut, vers le bas, vers la droite ou vers la gauche, tandis que par ailleurs, il est prévu une commande de zoom et une commande de netteté.

Pour assurer ces commandes, il est possible de représenter sur le cadre 1 des indications correspondant aux commandes qui viennent d'être mentionnées, par exemple par une majuscule figurant sur la face avant de l'un des côtés du cadre 1 (Fig.1, H, B, DROITE, GAUCHE, Z et N). Toutefois, il est également possible de représenter les indications directement sur l'écran en y affichant un synoptique sur lequel sont représentées dans des champs particuliers les commandes à obtenir. Une telle méthode d'affichage des commandes peut être particulièrement utile dans d'autres applications que l'on examinera par la suite. Les indications peuvent d'ailleurs être représentées en incrustation sur l'image prise par la caméra ou bien être représentées indépendamment.

On a représenté sur la Fig.9, les huit relais qui sont nécessaires pour la commande de la caméra 30 de la Fig.8. Ces relais qui sont désignés par les références 28a à 28e sont raccordées à des monostables eux-mêmes raccordés à des portes OU regroupant quatre sources-détecteurs (voir Fig.7).

Dans une caméra de télévision, la commande de zoom et celle de la netteté sont effectuées par des moteurs qui doivent tourner dans les deux sens et il est donc nécessaire dans le cas précis de la Fig.8 de prévoir quatre relais supplémentaires 31a, 31b, 31c et 31d afin d'obtenir un blocage mutuel des alimentations dans les deux sens des moteurs au cas où l'utilisateur, par erreur, provoquerait la commande des deux sens d'un seul moteur. En d'autres termes, le moteur de zoom Z, par exemple, peut être alimenté à travers les contacts de relais 31a-2 ou le contact 31b-2 qui sont raccordés respectivement à une tension positive et négative. La bobine de ce relais 31a, ne peut être excitée que si le relais 31b n'est pas excitée où en d'autres termes si le contact 31b-1 est fermé. Il en est de même pour le moteur de netteté N. Par contre, les moteurs d'attitude de la caméra désignés par H, B, G et D peuvent être directement commandés par un contact d'un relais 28 (voir Fig.9).

On vient de décrire une application particulière de l'invention à la commande d'une caméra de télévision. Toutefois, l'invention peut être utilisée dans de nombreuses autres applications et notamment dans les suivantes :

1) La gestion d'une banque d'images et, ou de données. (I.A.O, C.A.O, D.A.O. ou E.A.O, Information, Conception, Dessin ou Enseignement assisté par ordinateur).

Dans ce cas d'application, le cadre peut être associé à un plan, un synoptique, une maquette ou à un écran pour en faciliter l'exploitation ou permettre par un logiciel la gestion et l'accès à une banque d'informations visuelles ou sonores.

En E.A.O, le cadre peut être associé à un moniteur sur lequel apparaît le programme d'apprentis- sage par exemple sous forme de questions à réponses multiples. Ces questions peuvent être affichées sur l'écran du moniteur à des endroits particuliers et si l'élève indique une question avec le doigt, l'interruption du faisceau lumineux correspondant à un couple source-détecteur prédéterminé, peut déclencher une commande particulière indiquant dans une image suivante affichée si la réponse est bonne ou fausse et provoquant également en fonction de la réponse à l'aff- chage d'un élément visuel suivant du programme d'apprentissage. (par exemple, la télécommande d'un magnétoscope, d'un vidéodisque et la recherche d'une séquence correspondant à la question posée). On comprend que ce mode d'application à l'enseignement peut subir de nombreuses modifications et adaptations qui rentrent toutes dans le cadre de la présente invention.

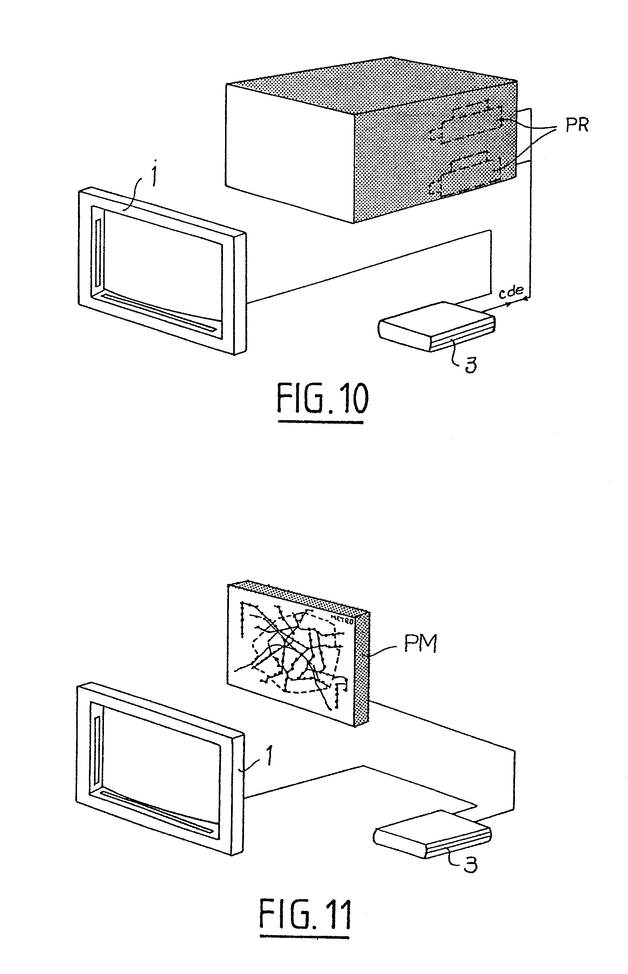

2) La projection d'images sur un écran par rétro-projection, par exemple (Fig.10). Le cadre 1 peut alors permettre la commande de l'avance d'une diapositive, la mise au point de l'optique du projecteur PR ou la recherche de diapositives.

3) La commande d'un processus à partir d'un synoptique, un plan, une photo ou une maquette, auquel est associé le cadre tactile 1. Dans ce cas, l'invention est appliquée tout à fait en dehors de la technique vidéo et le synoptique peut par exemple présenter un dessin d'une installation industrielle à commander, les machines à arrêter ou à mettre en marche étant représentées par exemple à un endroit particulier du synoptique et correspondant à un couple source-détecteur déterminé. Si ce couple est indiqué par l'utilisateur, la sortie correspondante du circuit peut alors déclencher la commande du moteur en question. Dans un même ordre d'idées, la synoptique peut être une carte géographique, un plan de métro PM (Fig.11), un plan d'implantation de bâtiments d'une exposition, d'un musée ou analogue, le couple indiqué par l'utilisateur pouvant déclencher l'affichage d'une information quelconque, d'un itinéraire à suivre ou analogue afin d'en faciliter la commande à distance de périphérique ou la recherche d'une information plus détaillée.

4) Les jeux vidéo. Cette application rappe- le celle qui a été décrite ci-dessus à propos des programmes d'enseignement, car le fait de placer un obstacle dans un faisceau d'un couple source-détecteur prédéterminé, peut entraîner une modification ou une commande du jeu affiché sur l'écran de télévision utilisé pour celui-ci.

REVENDICATIONS

1. Générateur d'ordres électriques par interruption manuelle d'un rayonnement lumineux du type comprenant une série de sources de rayonnement (7), une série de détecteurs (8) de ce même rayonnement, ainsi qu'un circuit d'alimentation et d'exploitation (3) raccordé aux sources (7) et aux détecteurs (8), qui sont disposés respectivement selon des rangées parallèles en se faisant face le long des bords du champ d'ime image affichée et en formant une série de couples source-détecteur destinés à être associées respectivement à des indications visuelles (H,B,D,G,Z,N) pour matérialiser un ordre à donner, ledit circuit d'alimentation et de commande (3) comportant des moyens (20,22) qui, lorsqu'un faisceau de rayonnement d'un couple source-détecteur est interrompu, engendrent un signal électrique (C) capable de déclencher l'ordre correspondant à ce faisceau, caractérisé en ce que ledit circuit d'alimentation et d'exploitation (3) comporte des moyens (10 à 19) pour assurer une alimentation séquentielle desdites sources lumineuses (8) avec un courant de fonctionnement impulsionnel.

2. Générateur suivant la revendication 1, caractérisé en ce que chaque couple source-détecteur (7) est associé à des moyens de synchronisation (22) entre les sources et les récepteurs n'autorisant la production dudit signal électrique (C) capable de déclencher un ordre à donner que lorsque la source (7) de ce couple est alimentée.

3. Générateur suivant la revendication 2, caractérisé en ce que lesdits moyens d'alimentation séquentielle et lesdits moyens de synchronisation comportent une horloge de base de temps (10), un circuit diviseur (11 à 14) pour diviser la fréquence de cette horloge de manière à créer des périodes d'alimentation durant un cycle de travail déterminé, en un nombre égal à celui des couples source-détecteur (7,8), ce circuit diviseur étant relié par ses sorties (15,16) auxdites sources (7) pour qu'elles reçoivent séquentiellement une impulsion d'alimentation durant ledit cycle de travail, et en ce que chaque détecteur (8) est relié à une porte logique (22) qui combine le signal qu'il fournit avec l'impulsion d'alimentation correspondante provenant dudit diviseur.

4. Générateur suivant l'une quelconque des revendications 1 à 4, caractérisé en ce qu'au moins certains des détecteurs sont agencés en groupes et en ce que le circuit d'alimentation et d'exploitation (3) comporte des moyens (24) pour déclencher l'ordre désiré en fonction de l'interruption du faisceau frappant l'un des détecteurs d'un groupe détecteurs (7,8) afin de déterminer une certaine résolution de l'action sur le générateur.

5. Générateur suivant l'une quelconque des revendications 3 et 4, caractérisé en ce que lesdits moyens (20,22,24) engendrant ledit signal électrique capable de déclencher l'ordredésiré comprennent pour chaque couple source-détecteur (7,8) ou pour chaque groupe de couples source-détecteur, un circuit de temporisation (26) qui fixe un intervalle de temps de maintien dudit signal électrique supérieur audit cycle de travail après le déclenchement de ce signal.

6. Générateur suivant l'une quelconque des revendications précédentes, dans lequel ledit support (1) est un cadre dans deux au moins des côtés opposés sont montés respectivement les sources (7) et les détecteurs (8), caractérisé en ce que ledit cadre (1) est réalisé à partir d'éléments tubulaires de section rectangulaire, dont les faces intérieures présentent une rangée d'ouvertures derrière lesquelles sont placés respectivement les sources et les détecteurs (7,8).

7. Générateur suivant l'une quelconque des revendications 1 à 6, caractérisé en ce que les indications visuelles (H,B,D,G,Z,N) matérialisant les ordres à donner sont prévues sur un support (1) sur lequel sont montés les couples source-détecteur (7,8).

8. Générateur suivant l'une quelconque des revendications 1 à 6, caractérisé en ce que les indications visuelles font partie d'une image synoptique, d'un plan, d'une photo ou d'une maquette apparaissant derrière un support (1) sur lequel sont montés les couples source-détecteur (7,8).

9. Générateur suivant la revendication 7, dans lequel ledit support (1) est placé devant un tube à rayons cathodiques (M) sur lequel l'image est affichée, caractérisé en ce qu'il est raccordé à une caméra de télévision (30), de préférence munie d'un zoom et montée sur une tourelle pour en commander le ou les mouvements en fonction des signaux électriques (C) capables de déclencher les ordres correspondants à ces mouvements, ladite image étant prise par ladite caméra.

FIG.1

FIG.2

0112253

FIG.3

FIG.4

PAS D'OBSTACLE          OBSTACLE

FIG_5  3/7  0112253

BASE DE TEMPS

DIVISEURS

LED 1
LED 2
LED 3
DECODAGE

COUPLE 1.

NI 17
AMPLI 18
EMISSION

SORTIE TR 20
SORTIE NON ET 22
MONOSTABLE 26
RECEPTION AVEC OBSTACLE

COUPLE 2.

NI 17
AMPLI 18
EMISSION

SORTIE TR 20
SORTIE NON ET 22
MONOSTABLE
RECEPTION SANS OBSTACLE

## FIG.6

## FIG.8

FIG.7

0112253

## FIG.9

FIG.10

FIG.11

0112253

**Office européen des brevets**

## RAPPORT DE RECHERCHE EUROPEENNE

Numéro de la demande

EP 83 40 2425

### DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| X | AUTOMATISME, vol. 22, no. 12, décembre 1977, Paris (FR) C. PELLEGRINI et al.: "Un nouveau système d'entrée graphique et son utilisation en mode interactif", pages 342-347. * figures 1-3; pages 342-345 * | 1,2,4, 5 | G 06 F 3/03B G 06 K 11/06 |
| Y | AUTOMATISME, --- | 7,8,9 | |
| X | DISPLAYS, vol. 3, no. 3, juillet 1982, Butterworth & Co. Ltd., Guildford, Surrey (GB) M.D. APPERLEY et al.: "A 'locate-and-select' touch screen", pages 131-134. * en entier * | 1,2,4, 5,6,8 | |
| Y | DISPLAYS, --- | 7,9 | DOMAINES TECHNIQUES RECHERCHES (Int. Cl. ³) G 06 F G 06 K |
| A | ELECTRONIQUE ET APPLICATIONS INDUSTRIELLES, no. 255, juin 1978, Paris (FR) P. VERNEL et al.: "Réalisation d'un terminal interactif économique. Clavier à voter à faisceaux infrarouges", pages 57-59. * figures 1,2; pages 52,53 * --- -/- | 1-3,4, 5,6,7, 8 | |

Le présent rapport de recherche a été établi pour toutes les revendications

| Lieu de la recherche LA HAYE | Date d'achèvement de la recherche 09-03-1984 | Examinateur BECKER K.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82

Office européen
des brevets

**RAPPORT DE RECHERCHE EUROPEENNE**

| Catégorie | Citation du document avec indication, en cas de besoin, des parties pertinentes | Revendication concernée | CLASSEMENT DE LA DEMANDE (Int. Cl. 3) |
|---|---|---|---|
| | **DOCUMENTS CONSIDERES COMME PERTINENTS** | | Page 2 |
| A | FR-A-2 131 543 (SIEMENS AG) <br> * figures 1,2,3; revendications 1,2; page 3, ligne 23 - page 4, ligne 24 * | 1-6 | |
| A | FR-A-2 080 100 (SOCIETE D'OPTIQUE, DE MECANIQUE ET DE RADIO "ONERA SEGIO") <br> * figures 1,2; revendications 1,2; page 4, ligne 1 - page 5, ligne 35 * | 1-6 | |
| A | FR-A-2 486 267 (HEWLETT-PACKARD FRANCE S.A.) <br> * figures 1,2; revendications 1,2; page 1, ligne 1 - page 2, ligne 8 * | 1-6 | |
| Y | GB-A-2 096 867 (TOUCH TECHNOLOGY LTD.) <br> * abrégé; figure 1; page 1, lignes 3-127 * | 8,9 | DOMAINES TECHNIQUES RECHERCHES (Int. Cl. 3) |
| Y | US-A-4 305 071 (BELL et al.) <br> * figure 1; figure 6; colonne 2, ligne 65 - colonne 3, ligne 25 * | 7 | |
| Y | US-A-4 315 282 (SCHUMACHER) <br> * abrégé; figure 1; colonne 1 - colonne 2, ligne 61 * | 8,9 | |
| | --- -/- | | |

Le présent rapport de recherche a été établi pour toutes les revendications

| Lieu de la recherche <br> LA HAYE | Date d'achèvement de la recherche <br> 09-03-1984 | Examinateur <br> BECKER K.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82

**Office européen des brevets**

# RAPPORT DE RECHERCHE EUROPEENNE

| | DOCUMENTS CONSIDERES COMME PERTINENTS | | Page 3 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 978 280 (BECTON et al.) * abrégé; figure; colonne 1 - colonne 2, ligne 7 * | 8,9 | |
| A | US-A-4 245 244 (LIJEWSKI et al.) * abrégé; figures; colonne 3, ligne 36 - colonne 5, ligne 49 * | 8,9 | |
| A | IBM TECHNICAL DISCLOSURE BULLETIN, vol. 19, no. 3, août 1976, New York (US) R. SUDING: "Low-cost mapping scanner", page 815. * en entier * | 9 | |
| E | DE-A-3 135 660 (BROWN, BOVERI & CIE AG) * revendication; page 6, lignes 1-27; figures * | 1,2 | DOMAINES TECHNIQUES RECHERCHES (Int. Cl. ³) |

Le présent rapport de recherche a été établi pour toutes les revendications

| Lieu de la recherche LA HAYE | Date d'achèvement de la recherche 09-03-1984 | Examinateur BECKER K.H. |
|---|---|---|